# EUROPEAN PATENT SPECIFICATION

(11) **EP 1 214 179 B1**
(45) Date of publication and mention of the grant of the patent: **28.04.2004**
(21) Application number: 00958804.7
(22) Date of filing: 07.09.2000
(51) Int. Cl.: B26F 1/16

(54) **HOLE-FORMING TOOL**
BOHRWERKZEUG
OUTIL DE PERCAGE DE TROUS

(30) Priority: 07.09.1999 GB 9920976
(43) Date of publication of application: 19.06.2002
(73) Proprietor: Artex Rawlplug Limited, Loughborough, Leicestershire LE12 6HX (GB)
(72) Inventor: WALLACE, Thomas, Campbell, Glasgow G44 3PX (GB)
(74) Representative: Pattullo, Norman
(86) International application number: PCT/GB2000/003419
(87) International publication number: WO 2001/017736

(56) References cited:
- WO-A-99/06717
- GB-A- 633 938
- GB-A- 2 050 214
- US-A- 4 617 692
- US-A- 4 818 157
- US-A- 5 160 225
- US-A- 5 533 429

## Description

The present invention relates to a hole-forming tool and in particular a bit for forming a hole in a wall of frangible material (see for example WO-A-9 906 717).

It is often desirable to form a hole in a wall of material to locate a fixing on which to hang a picture, for example. Typically, such a hole may be formed by using an electric drill and conventional drill bit. However, in the case of a wall of frangible material, for example plasterboard or plywood, the high speed drill bit can damage the wall and/or fray the material. It may also be an arduous task to maintain positional stability of the conventional drill bit while drilling the hole. All these factors make it difficult to form a neat hole with an even bore.

The present invention is directed to overcoming at least some of the above problems.

According to the present invention there is provided a hole-forming bit according to claim 1.

The dependent claims 2-4 refer to further embodiments of the invention.

Preferably, the cylindrical portion has a smooth outer surface.

Preferably, the recess has a non-uniform taper towards the leading end of the elongate body.

Preferably, the edges of the recess define blade edges.

Preferably, the insertion-limiting means comprises a member extending outwardly around the elongate body.

Preferably, the skirt has a radius of between 5 and 60% greater than that of the elongate body.

Preferably, the hole-forming bit may be used with a handle.

Preferably, the hole-forming bit has an engagable portion for releasably fixing it to a co-operable receiving member at one end of the handle.

Preferably, the engagable portion has a detent to resist withdrawal of the hole-forming bit from the handle.

Preferably, the elongate body tapers inwardly in a non-uniform manner along a first gradient.

Preferably, the taper has a second gradient, steeper than the first gradient, along the longitudinal axis of the elongate body at the leading end thereof.

Preferably, the hole-forming bit comprises a metallic material.

Preferably, the hole-forming bit is formed by die casting.

An embodiment of the present invention will be described, by way of example only, with reference to the accompanying diagrammatic drawings in which:
Fig. 1 is a side view of a hole-forming tool according to the invention;

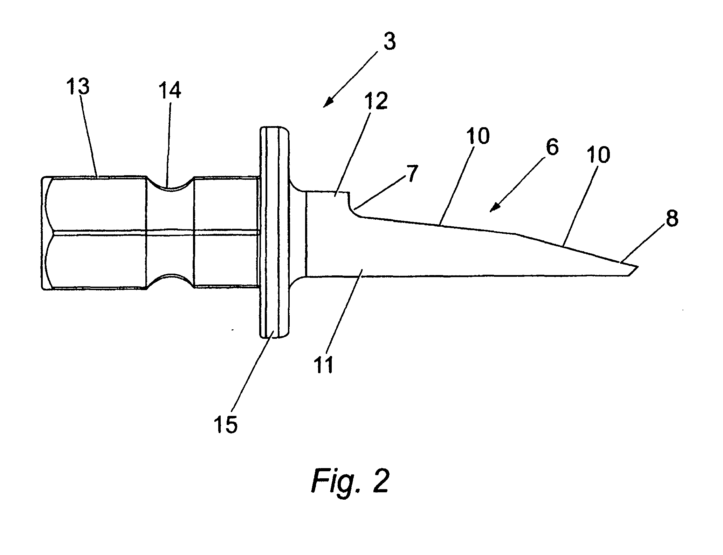

Fig. 2 is a side view of a hole-forming member according to the invention;

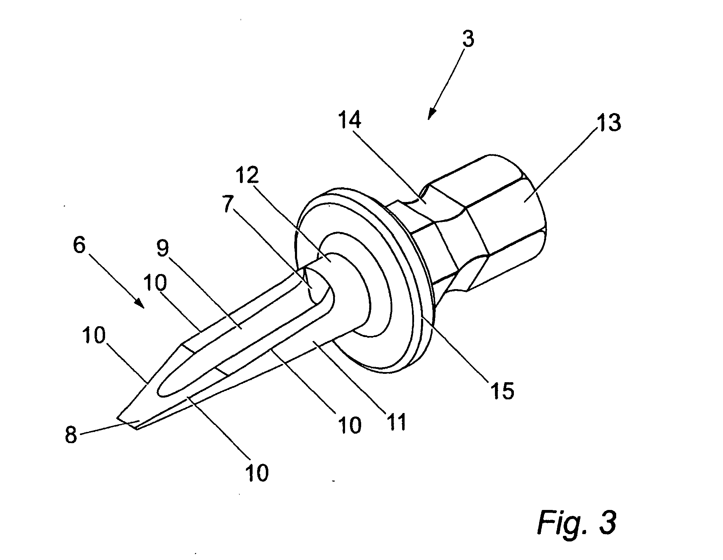

Fig. 3 is a perspective view of the hole-forming member of Fig. 2; and

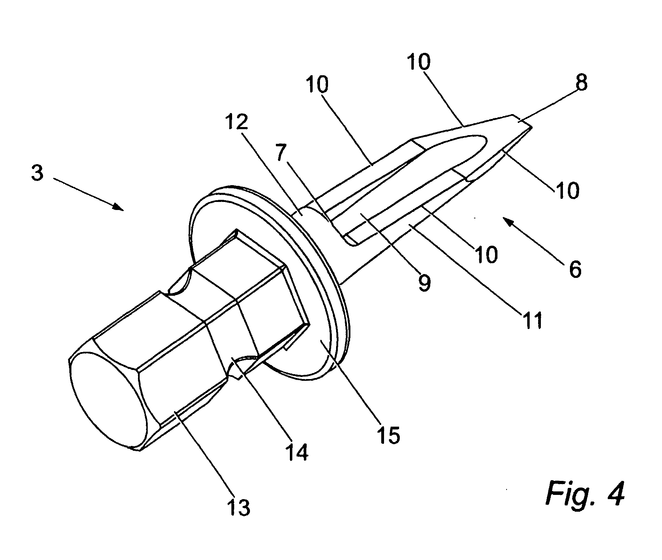

Fig 4. is a perspective view from a different angle of the hole-forming member of Fig. 2.

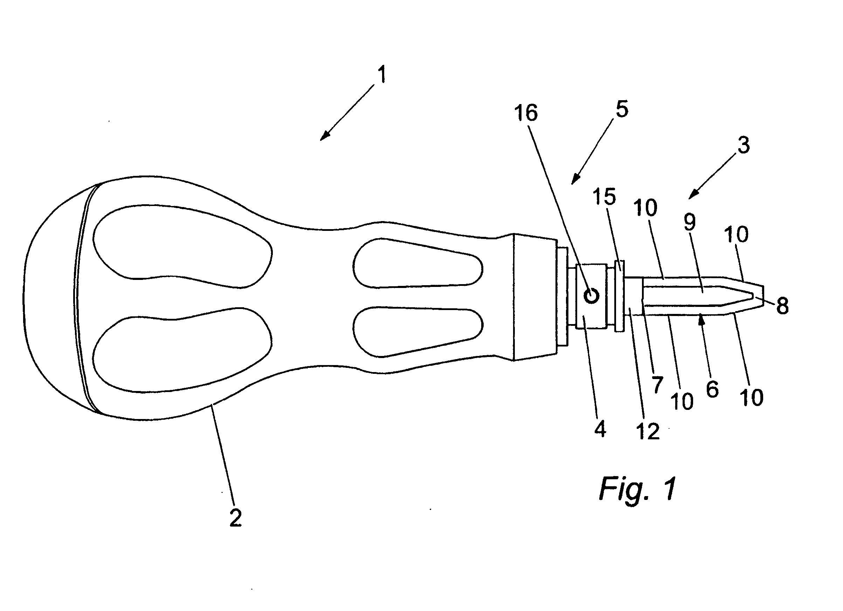

Referring to the drawings and initially to Fig. 1 there is provided a hole-forming tool indicated generally by the reference numeral 1 comprising a handle 2 and a hole-forming member in the form of a bit 3. The handle 2 has a bit receiver 4 at one end 5 thereof adapted to receive and hold the bit 3.

The bit 3 has a hollow tube 6 traverse sectioned from one end 7 thereof to a tip 8 of the bit 3, generally forming the shape of a nib. The sectioned tube 6, by the omission of part of its wall, provides a non-uniform open recess 9 along its longitudinal axis.

The side edges of the recess 9 taper or converge along a first gradient from the end 7 at an angle to the longitudinal axis of the sectioned tube 6 and then further taper at a steeper second gradient to the longitudinal axis of the sectioned tube 6 to form the tip 8. The side edges of the recess 9 taper to the tip 8 to an extent allowing the bit 3 to be driven into a wall of frangible material.

The side edges of the recess 9 form blade edges 10 for cutting a hole in a wall of fragible material, and the curved outer wall 11 of the sectioned tube 6 generally has a smooth surface to promote the formation of a neat smooth hole with an even bore.

The bit 3 includes a solid cylinder 12 adjacent to the end 7 of the sectioned tube 6 and co-axial therewith. The diameter of the cylinder 12 is equal to that of the sectioned tube 6. On insertion of the bit 3 into the wall, the cylinder 12 fits snugly into the hole formed. This allows no room for movement of the bit 3 in a lateral direction relative to the wall and thus improves positional stability of the hole-forming tool 1 and helps prevent misalignment of the bit 3 towards the end of insertion.

The bit 3 further includes a connector 13 for attachment to the handle 2 in the form of a hexagonal cylinder having a circumferential groove 14 approximately midway along its length, and an annular skirt 15 outwardly depending from one end of the connector 13 adjacent the cylinder 12. The skirt 15 has a radius greater than that of the cylinder 12.
On inserting the bit 3 into the wall the skirt 15 engages the surface of the wall preventing further insertion of the bit 3 into the wall.

The connector 13 is held by the handle 2 by inserting the connector 13 into the similarly shaped bit receiver 4. The bit 3 is retained in place by a spring-loaded ball 16 in a wall of the bit receiver 4, the spring-loaded ball 16 being biassed into the groove 14. When the bit 3 is fully inserted into the bit receiver 4, the skirt 15 lies flush against the bit receiver 4 as can be clearly seen from Fig. 1.

In use, the handle 2 of the hole-forming tool 1 is gripped by hand and the tip 8 is pushed into a face of a wall of frangible material (not shown), for example plasterboard or plywood, puncturing a hole therein normally to a depth approaching that of the tip 8. The bit 3 is then further pushed into the wall while rotating the handle 2 about the longitudinal axis of the sectioned tube 6 in a periodic clockwise and anti-clockwise motion relative to the face of the wall. The rotating blade edges 10 cut a hole in the wall as it is being inserted. The recess 9 facilitates trepanning of the material from the hole allowing the handle 2 to be rotated easily. When the bit 3 is almost fully inserted into the wall, the cylinder 12 fits snugly into the hole being formed allowing no room for movement of the bit 3 in a lateral direction relative to the wall and thus improving positional stability of the hole-forming tool 1 and helping to prevent misalignment of the bit 3 towards the end of insertion. Also, the cylinder 12 in combination with the smooth surface of the curved outer wall 11 helps provide a neat smooth hole with an even bore.

When the bit 3 has been fully inserted into the wall, the skirt 15 should lie flush with the surface of the wall. The skirt 15 prevents further insertion of the bit 3 into the wall.

When the hole is complete and the bit 3 is withdrawn from the wall, the bit 3 can then be removed from the handle 2 simply by pulling it free. The skirt 15 can be used as extra leverage for this purpose.

The quality and accurately sizing of the hole formed using this tool allows standard plugs to be held tightly along its length thus providing a secure fixing on screwing in of the plug into the hole.
It will be appreciated that the bit 3 can be produced in all sizes.

It will be further appreciated that the skirt 15 may form part of the handle 2.

It will also be appreciated that the bit 3 may be permanently fixed to the handle 2 or formed integrally therewith.

It is envisaged that the bit 3 may be used with a powered tool, for example, a drill.

The hole-forming tool may also be used to maintain existing holes. For example, over time a hole may become distorted and/or enlarged causing the plug therein to loosen. Using this tool, with a bit 3 having a diameter slightly larger than that of the existing hole, said hole may be trepanned thus smoothing it and making its bore even. A standard plug to fit the new hole will be held tightly along its length thus again providing a secure fixing on screwing in of the plug into the hole.

The embodiments herein described are not limited but may be varied in construction and detail, without departing from the scope of the invention as defined by the appended claims.

## Claims

1. A hole forming bit (3) comprising an elongate body (7) having an open recess (9) extending along a central longitudinal axis thereof, the elongate body tapering with a first gradient and a second gradient to a leading end (8), the second gradient being steeper than the first gradient and located at the leading end (8) of the elongate body (7) the leading end (8) being offset from the central longitudinal axis, a handle engageable portion (13) for releasably fixing the hole forming bit (3) to a tool handle **characterised in that** the hole forming bit (3) further includes a stabilising cylindrical portion (12) co-axial with and adjacent the trailing end of the elongate body (7), and an insertion limiting laterally depending skirt (15) adjacent the stabilising cylindrical portion (12) at the distal end to the elongate body (7).

2. A hole forming bit as claimed in Claim 1
wherein edges of the open recess (9) define blade edges (10).

3. A hole forming bit (3) as claimed in Claims 1 or 2 wherein the cylindrical portion (12) has a smooth outer surface.

4. A hole forming tool (1) comprising a hole forming bit as claimed in any preceding claim and a handle (2) including a co-operable receiving member (4) at one end of the handle engageable with the engageable portion of the hole forming bit.

## Patentansprüche

1. Eine Lochformungsspitze (3), beinhaltend einen länglichen Körper (7), der eine offene Aussparung (9), die sich entlang einer zentralen Längsachse davon erstreckt, aufweist, wobei sich der längliche Körper mit einer ersten Neigung und einer zweiten Neigung zu einem vorderen Ende (8) hin verjüngt, wobei die zweite Neigung steiler als die erste Neigung ist und sich am vorderen Ende (8) des länglichen Körpers (7) befindet, wobei das vordere Ende (8) von der zentralen Längsachse versetzt ist, einen mit einem Griff eingreifbaren Abschnitt (13) zum lösbaren Befestigen der Lochformungsspitze (3) an einem Werkzeuggriff, **dadurch gekennzeichnet, dass** die Lochformungsspitze (3) ferner einen stabilisierenden zylinderförmigen Abschnitt (12), der mit dem hinteren Ende des länglichen Körpers (7) koaxial ist und an diesen anliegt, und einen die Einführung beschränkenden, seitlich abhängenden Rand (15), der an dem distalen Ende von dem länglichen Körper (7) an den stabilisierenden zylinderförmigen Abschnitt (12) anliegt, umfasst.

2. Lochformungsspitze gemäß Anspruch 1, wobei die Kanten der offenen Aussparung (9) Messerkanten (10) definieren.

3. Lochformungsspitze (3) gemäß Anspruch 1 oder 2, wobei der zylinderförmigen Abschnitt (12) eine glatte äußere Fläche aufweist.

4. Ein Lochformungswerkzeug (1), das eine Lochformungsspitze gemäß einem der vorhergehenden Ansprüche und einen Griff (2), der an einem Ende des Griffs einen zusammenwirkenden Aufnahmeabschnitt (4), der mit dem eingreifbaren Abschnitt der Lochformungsspitze eingreifen kann, beinhaltet.

## Revendications

1. Une mèche (3) destinée à la formation de trous comportant un corps allongé (7) ayant un renfoncement ouvert (9) se prolongeant suivant un axe longitudinal central de celui-ci, le corps allongé s'effilant avec une première déclivité et une deuxième déclivité jusqu'à une extrémité d'attaque (8), la deuxième déclivité étant plus forte que la première déclivité et située à l'extrémité d'attaque (8) du corps allongé (7), l'extrémité d'attaque (8) étant décalée par rapport à l'axe longitudinal central, une portion engageable formant manche (13) pour fixer, de façon libérable, la mèche (3) destinée à la formation de trous à un manche d'outil **caractérisé en ce que** la mèche (3) destinée à la formation de trous comprend de plus une portion de stabilisation cylindrique (12) coaxiale et adjacente à l'extrémité de fuite du corps allongé (7), et une collerette (15) latéralement dépendante limitant l'insertion adjacente à la portion de stabilisation cylindrique (12) à l'extrémité distale du corps allongé (7).

2. Une mèche destinée à la formation de trous telle que revendiquée dans la revendication 1 dans laquelle des bords du renfoncement ouvert (9) définissent des bords de lame (10).

3. Une mèche (3) destinée à la formation de trous telle que revendiquée dans les revendications 1 ou 2 dans laquelle la portion cylindrique (12) a une surface extérieure lisse.

4. Un outil (1) destiné à la formation de trous comportant une mèche destinée à la formation de trous telle que revendiquée dans n'importe quelle revendication précédente et un manche (2) comprenant un élément de réception pouvant coopérer (4) à une extrémité du manche engageable avec la portion engageable de la mèche destinée à la formation de trous.
